# EUROPEAN PATENT APPLICATION

(11) **EP 1 061 692 A2**
(43) Date of publication of application: **20.12.2000**
(21) Application number: 00305024.2
(22) Date of filing: 14.06.2000
(51) Int. Cl.: H04L 12/24

(54) **Controlling device, communication system and controlling method**

(30) Priority: 16.06.1999 JP 16914799
(71) Applicant: SONY CORPORATION, Tokyo 141 (JP)
(72) Inventor: Ogihara, Yuji, c/o Sony Corporation, Tokyo (JP); Hiroyasu, Shoko, c/o Sony Corporation, Tokyo (JP); Goto, Takashi, c/o Sony Corporation, Tokyo (JP); Yamaguchi, Hiroshi, Sony Digital Prod. Co. Ltd., Azumi-Gun, Nagano (JP)
(74) Representative: Ayers, Martyn Lewis Stanley

(57) **Abstract**

A controlling device for controlling a plurality of controlled devices connected to a data bus for data transmission based on a predetermined communication format comprises: an inputting element for inputting text information corresponding to each of the plurality of controlled devices; a device identification information acquiring element for acquiring device identification information from the plurality of controlled devices, the acquired device identification information being unique to each of the controlled devices; a storage controlling element for storing into a memory the text information input through the inputting element, in combination with the device identification information acquired by the device identification information acquiring element; and a display controlling element which, based on the device identification information acquired by the device identification information acquiring element, retrieves the text information stored in the memory in combination with the device identification information, the display controlling element further displaying the retrieved text information. This allows a user to recognize the controlled devices more easily than if they were displayed together with their preinstalled ID information.

## Description

The present invention relates to a controlling device, a communication system and a controlling method for transmitting and receiving data through a data interface in accordance with a predetermined data communication format.

Today, the IEEE (Institute of Electrical and Electronic Engineers) 1394 data interface has gained widespread acceptance as a digital data interface. Faster than the SCSI among others in terms of data transfer rate, the IEEE 1394 data interface is known to permit isochronous communication whereby data of a predetermined size are transmitted and received periodically. As such, the IEEE 1394 data interface is deemed advantageous in transferring stream data such as AV (audio/video) data in real time.

Under these circumstances, data transmission systems have been proposed which interconnect various digital AV (audio visual) devices and electronic equipment such as a personal computer via a data bus complying with digital interface standards such as the IEEE 1394.

Such AV systems permit so-called remote control. For example, where a disc recording and reproducing apparatus is connected with a personal computer, suitably operating the personal computer can control the disc recording and reproducing apparatus in recording and playback as well as in editing recorded sources.

Where the personal computer is used to control devices connected to an IEEE 1394 data bus as in the above example, there may be cases in which it is necessary to display information about the connected devices using a GUI (graphical user interface) format on a display screen of the computer.

To implement the above setup requires making suitable arrangements so that any one of the displayed devices connected to the IEEE 1394 bus may be recognized comprehensively by users.

For such GUI device identification, it is common practice to display in text a manufacturer's name and a model name of the device in question.

Each device compatible with the IEEE 1394 interface is typically shipped together with its ID information such as a manufacturer's name and a model name held in a ROM or like element.

In operation, the personal computer receives from the configured devices their manufacturers' names and model names and displays them in text. This makes it possible for the user to recognize the connected devices in a substantially visual manner on a GUI screen.

This GUI-based identification setup, however, has a problem: if the user has connected multiple units of the same model from the same manufacturer to the bus, the multiple devices will each be indicated with the same manufacturer's name and the same model name.

One way to bypass the above problem is a display of node unique IDs representing the configured devices. A node unique ID is an ID code specific to each device compatible with the IEEE 1394 interface. In other words, no two devices share the same node unique ID.

When such node unique IDs are displayed in text, each device is always assigned its unique character pattern. This makes it possible for the user to recognize and identify each connected device visually on a GUI screen.

However, each node unique ID is eight-byte information which is necessarily composed of a series of many alphanumeric characters that may or may not be readily comprehensible to users. In practice, such an aggregation of characters is not quite conducive to prompt identification of devices on the screen by the user. The problem becomes more acute the greater the number of devices connected to the IEEE 1394 bus.

According to one aspect of the invention, there is provided a controlling device for controlling a plurality of controlled devices connected to a data bus for data transmission based on a predetermined communication format, the controlling device comprising: an inputting element for inputting text information corresponding to each of the plurality of controlled devices; a device identification information acquiring element for acquiring device identification information from the plurality of controlled devices, the acquired device identification information being unique to each of the controlled devices; a storage controlling element for storing into a memory the text information input through the inputting element, in combination with the device identification information acquired by the device identification information acquiring element; and a display controlling element which, based on the device identification information acquired by the device identification information acquiring element, retrieves the text information stored in the memory in combination with the device identification information, the display controlling element further displaying the retrieved text information.

Other features and advantages of the invention will become more apparent upon a reading of the following description given by way of non-limitative example with reference to the drawings, in which:
Fig. 1 is a structural view of a layered stack model of an IEEE 1394 format for an embodiment of the invention;
Fig. 2 is a structural view of an IEEE 1394 bus cable for use with the embodiment;
Fig. 3A is a timing chart of a DATA signal transmitted over the IEEE 1394 bus of the embodiment;
Fig. 3B is a timing chart of a STROBE signal transmitted over the IEEE 1394 bus;
Fig. 3C is a timing chart of a CLOCK signal transmitted over the IEEE 1394 bus;
Fig. 4 is a conceptual view of device connections using IEEE 1394 bus lines;
Fig. 5A is an explanatory view showing how bus reset notices are sent over IEEE 1394 bus lines upon generation of a bus reset;
Fig. 5B is an explanatory view depicting parent-child(ren) relations between configured devices on IEEE 1394 bus lines following a bus reset;
Fig. 5C is an explanatory view explaining how node IDs of configured devices are established using the IEEE 1394 bus;
Fig. 6 is a schematic view of a cycle structure in the IEEE 1394 format;
Fig. 7A is a process transition diagram showing basic transaction rules on asynchronous communication over the IEEE 1394 bus;
Fig. 7B is a table that lists contents of transaction requests transmitted as per the rules in Fig. 7A;
Fig. 8A is a schematic view of a data structure in a bus address register for the IEEE 1394 bus;
Fig. 8B is a schematic view of a bus ID data structure for identifying IEEE 1394 bus lines;
Fig. 8C is a schematic view of a node ID data structure for devices connected to the IEEE 1394 bus;
Fig. 8D is a schematic view of a data structure in register space for the IEEE 1394 bus;
Fig. 8E is a schematic view of a data structure in register address for the IEEE 1394 bus;
Fig. 9 is a schematic view of a CIP structure in the IEEE 1394 format;
Fig. 10 is a conceptual view of typical connective relations determined by plugs in the IEEE 1394 format;
Fig. 11A is a schematic view of a data structure in an output plug control register oPCR[n] in the IEEE 1394 format;
Fig. 11B is a schematic view of a data structure in an input plug control register iPCR[n] in the IEEE 1394 format;
Fig. 12 is a process transition diagram in effect when a message is written to a command/response register using the IEEE 1394 format;
Fig. 13 is a schematic view of an asynchronous packet data structure in the IEEE 1394 format;
Fig. 14 is a table of typical ctype/response definitions for an asynchronous packet in the IEEE 1394 format;
Fig. 15A is a schematic view of a subunit_type data structure for an asynchronous packet in the IEEE 1394 format;
Fig. 15B is a table of operation code commands in effect when the subunit_type of an asynchronous packet in the IEEE 1394 is a VCR;
Fig. 16 is an explanatory view of an asynchronous plug structure in the IEEE 1394 format;
Fig. 17A is a schematic view of a data structure comprising locations of plug address space in the IEEE 1394 format;
Fig. 17B is a schematic view of a node offset data structure comprising locations of plug address space in the IEEE 1394 format;
Fig. 17C is a schematic view of a plug data structure comprising locations of plug address space in the IEEE 1394 format;
Fig. 18A is a schematic view of a plug address data structure in the IEEE 1394 format;
Fig. 18B is a schematic view of a register data structure for a plug address in the IEEE 1394 format;
Fig. 18C is a table of address offsets in the IEEE 1394 format;
Fig. 19A is a schematic view of a register data structure for a plug address on the producer side in the IEEE 1394 format;
Fig. 19B is a schematic view of a register data structure for a plug address on the consumer side in the IEEE 1394 format;
Fig. 20 is a process transition diagram illustrating command transactions between the producer side and the consumer side in the IEEE 1394 format;
Fig. 21 is a block diagram of a typical IEEE 1394 data interface system embodying the invention;
Fig. 22 is a block diagram of a personal computer constituting part of the system in Fig. 21;
Fig. 23 is a schematic view of a first device list window compatible with the IEEE 1394 data interface system;
Fig. 24 is a schematic view of a second device list window compatible with the IEEE 1394 data interface system;
Fig. 25 is a schematic view of a third device list window compatible with the IEEE 1394 data interface system;
Fig. 26 is a schematic view showing a structure of a user name list file stored in the personal computer (controller) of Fig. 22;
Fig. 27 is a flowchart of processing steps for entering a user name into the user name list file of Fig. 26; and
Fig. 28 is a flowchart of display control processing steps carried out by the personal computer (controller) of Fig. 22 to display a device list window upon bus reset generation.

Preferred embodiments of this invention will now be described in the following order:
1. IEEE 1394 Format
1-1. Overview
1-2. Stack Model
1-3. Forms of Signal Transmission
1-4. Bus Connection between Devices
1-5. Packets
1-6. Transaction Rules
1-7. Addressing
1-8. CIP (Common Isochronous Packet)
1-9. Connection Management
1-10. Commands and Responses under FCP
1-11. AV/C Command Packet
1-12. Plugs
1-13. Asynchronous Connection Transmission Procedures
2. Typical System Configuration Embodying the Invention
3. Typical Displays by Personal Computer
4. Processes

### 1. Data Communications of the Invention in Compliance with the IEEE 1394

### 1-1. Overview

An AV system with its components exchanging data therebetween over an IEEE 1394 bus is practiced as an embodiment of the invention. The AV system may include a personal computer and various audio devices. The personal computer may be arranged at least to control the audio devices (i.e., under remote control).

Below is a description of how data communications of the invention take place in accordance with the IEEE 1394.

The IEEE 1394 constitutes one of serial data communication standards. Under the IEEE 1394, there are two data transmission methods: isochronous communication method for periodical communications, and asynchronous communication method for asynchronous communications free of periodicity. Generally, the isochronous communication method is used for data transmission and reception while the asynchronous communication method is adopted for exchanging various control commands. A single cable allows data and commands to be transmitted and received by the two communication methods.

### 1-2. Stack Model

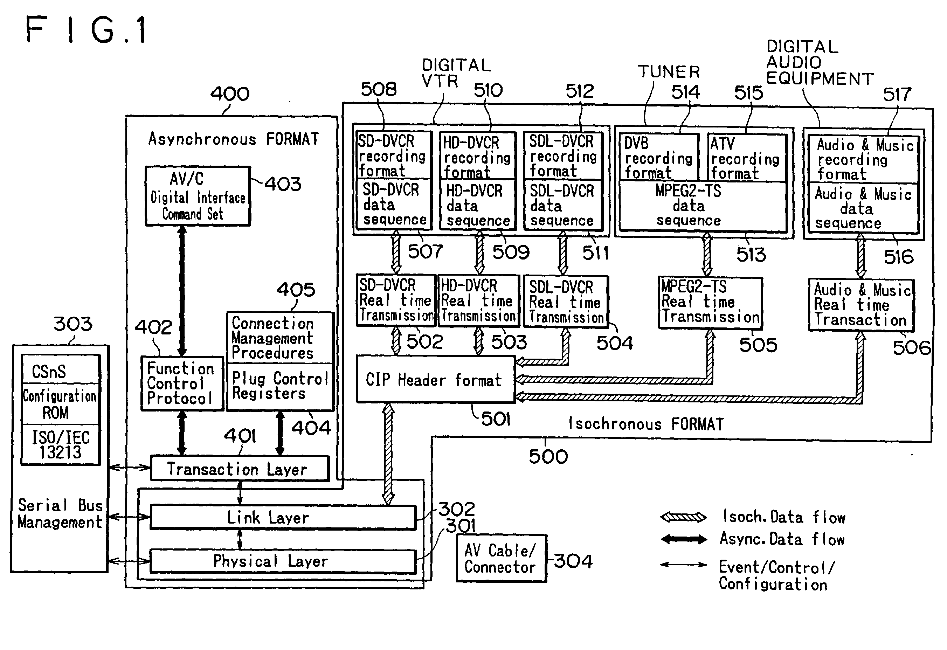

Fig. 1 shows a stack model of the IEEE 1394 as implemented in this embodiment. The IEEE 1394 format comes in two types: asynchronous format (400) and isochronous format (500). Common to both the asynchronous format (400) and the isochronous format (500) is the lowest layer called a physical layer (301) above which is a link layer (302). The physical layer (301) takes care of signal transmission on a hardware basis. The link layer (302) has functions for converting an IEEE 1394 bus illustratively to an internal bus specific to a given device.

The physical layer (301), the link layer (302), and a transaction layer (401) to be described below, are linked to serial bus management 303 by event/control/configuration lines. An AV cable/connector 304 represents physical connectors and cables needed for AV data transmission.

For the asynchronous format (400), the transaction layer (401) comes on top of the link layer (302). The transaction layer (401) defines data transmission protocols of the IEEE 1394. As basic asynchronous transactions, the transaction layer (401) designates a write transaction, a read transaction and a lock transaction.

The transaction layer (401) is topped by an FCP (Function Control Protocol)(402). The FCP (402) executes command control over various AV devices by use of control commands defined as AV/C commands (AV/C digital interface command set)(403).

Above the transaction layer (401) are plug control registers (404) for establishing plugs (logical device connections under the IEEE 1394, to be described later) using connection management procedures (405).

In the isochronous format (500), a CIP (Common Isochronous Packet) header format (501) comes above the link layer (302). Under management of the CIP header format (501), there are stipulated such transmission protocols as SD (Standard Density)-DVCR (Digital Video Camera Recorder) realtime transmission (502), HD (High Density)-DVCR realtime transmission (503), SDL (Standard Density Long)-DVCR realtime transmission (504), MPEG2 (Moving Picture Coding Experts Group 2)-TS (Transport Stream) realtime transmission (505), and audio and music realtime transmission (506).

The SD-DVCR realtime transmission (502), HD-DVCR realtime transmission (503), and SDL-DVCR realtime transmission (504) are data transmission protocols that address digital VTRs (Video Tape Recorders).

Data to be handled by the SD-DVCR realtime transmission (502) are a data sequence (SD-DVCR data sequence (507)) acquired in accordance with an SD-DVCR recording format (508).

Data to be manipulated by the HD-DVCR realtime transmission (503) are a data sequence (SD-DVCR data sequence (509)) obtained in keeping with an HD-DVCR recording format (510).

Data to be dealt with by the SDL-DVCR realtime transmission (504) are a data sequence (SD-DVCR data sequence (511)) gained as per an SDL-DVCR recording format (512).

The MPEG2-TS realtime transmission (505) is a transmission protocol that addresses illustratively tuners for digital broadcasts via satellite. Data to be handled by this protocol are a data sequence (MPEG2-TS data sequence (513)) acquired in compliance with a DVB (Digital View Broadcast) recording format (514) or an ATV (Analog Television) recording format (515).

The audio and music realtime transmission (506) is a transmission protocol that addresses a whole range of digital audio equipment including the MD system embodying this invention. Data to be dealt with by this protocol are a data sequence (audio and music data sequence) obtained in accordance with an audio and music recording format (517).

### 1-3. Forms of Signal Transmission

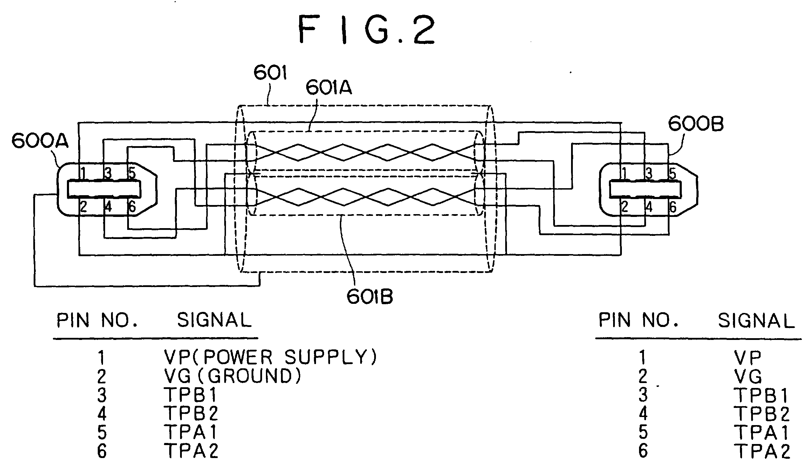

Fig. 2 depicts a typical structure of a cable actually used as an IEEE 1394 bus.

In Fig. 2, connectors 600A and 600B are connected via a cable 601. Pins numbered 1 through 6 are shown to be used as pin terminals attached to the connectors 600A and 600B.

Of the pin terminals on the connectors 600A and 600B, pin No. 1 corresponds to power supply (VP), pin No. 2 to ground (VG), pin No. 3 to TPB1, pin No. 4 to TPB2, pin No. 5 to TPA1, and pin No. 5 to TPA2.

The pins are interconnected between the connectors 600A and 600B as follows:
pin No. 1 (VP) to pin No. 1 (VP);
pin No. 2 (VG) to pin No. 2 (VG);
pin No. 3 (TPB1) to pin No. 5 (TPA1);
pin No. 4 (TPB2) to pin No. 6 (TPA2);
pin No. 5 (TPA1) to pin No. 3 (TPB1); and
pin No. 6 (TPA2) to pin No. 3 (TPB1).
Of the above pin connection pairs, two twisted-line pairs
pin No. 3 (TPB1) to pin No. 5 (TPA1) and
pin No. 4 (TPB2) to pin No. 6 (TPA2)
constitute a signal line 601A for alternately transmitting signals on a differential basis. Furthermore, another two twisted-line pairs
pin No. 5 (TPA1) to pin No. 3 (TPB1) and
pin No. 6 (TPA2) to pin No. 3 (TPB2)
form a signal line 601B for alternately transmitting signals also on a differential basis.

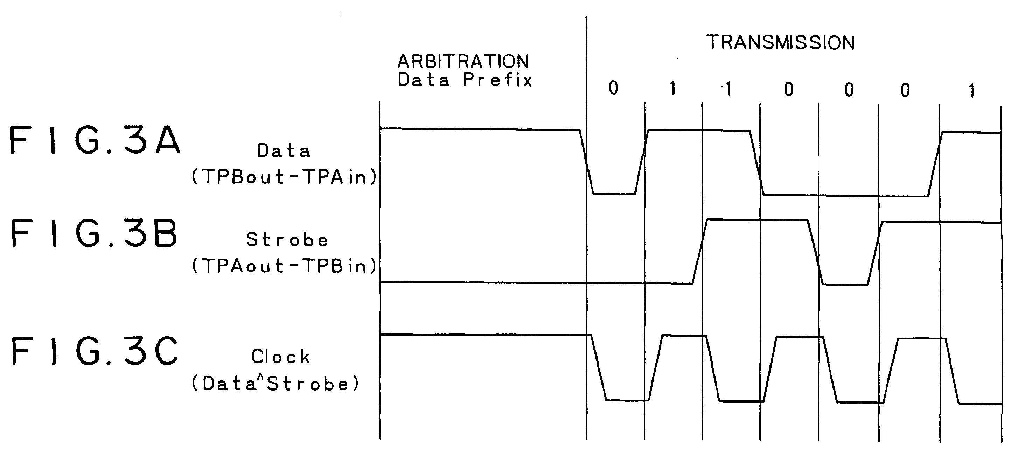

The signals sent over the two signal lines 601A and 601B are a data signal (Data) shown in Fig. 3A and a strobe signal (Strobe) in Fig. 3B.

The data signal in Fig. 3A uses one of the signal lines 601A and 601B. This data signal is output through TPB1 and TPB2 and enters TPA1. and TPA2.

The strobe signal in Fig. 3B is obtained by performing a predetermined logic operation on the data signal and on a transmission clock synchronized with this data signal. For that reason, the strobe signal has a frequency lower than that of the actual transmission clock. The strobe signal uses either of the signal lines 601A and 601B that is not occupied for data signal transmission. Following propagation over the signal line, the strobe signal is output through TPA1 and TPA2 to enter TPB1 and TPB2.

Suppose that the data signal of Fig. 3A and strobe signal of Fig. 3B are input to a device complying with the IEEE 1394. In that case, the device carries out the appropriate logic operation on the input data signal and strobe signal to generate a transmission clock (Clock) shown in Fig. 3C. The transmission clock thus generated is used for necessary input data signal processing.

By adopting such hardware-based data transmission forms, the IEEE 1394 format eliminates the need for transferring a rapid-cycle transmission clock over cables between configured devices. This enhances the reliability of signal transmission.

Although the six-pin arrangement has been described above, this is not limitative of the invention. Alternatively, the IEEE 1394 format may omit the power Supply (VP) and ground (VG) to form a four-pin arrangement consisting of two twisted-line pairs, i.e., signal lines 601A and 601B only.

### 1-4. Bus Connection between Devices

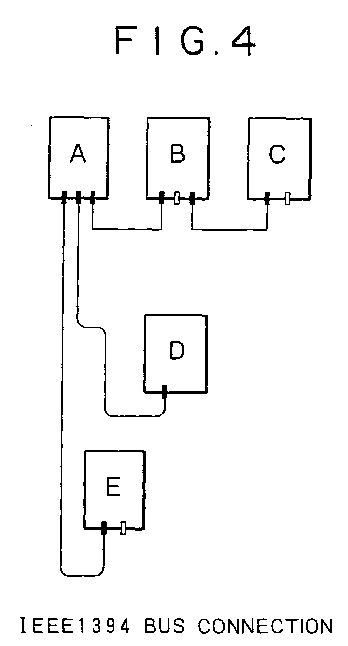

Fig. 4 illustrates schematically how devices are typically interconnected by use of IEEE 1394 buss. The setup of Fig. 4 shows five devices A through E (nodes) being connected for intercommunication via the IEEE 1394 buses (i.e., cables).

The IEEE 1394 interface is capable of what is known as daisy-chain connection whereby apparatuses such as the devices A, B and C in Fig. 4 are serially connected through the IEEE 1394 buses. The interface also permits so-called branch connection whereby an apparatus is connected in parallel with multiple apparatuses, as in the setup of Fig. 4 in which the device A is connected parallelly with the devices B, D and E.

The system as a whole is allowed to have up to 63 devices (nodes) configured through both branch connection and daisy-chain connection. Used alone, the daisy-chain connection permits a configuration of up to 16 devices (16 pop). Terminators needed for the SCSI (Small Computer System Interface) are not necessary for the IEEE 1394 interface.

The IEEE 1394 interface allows the devices connected by such daisy-chain connection or branch connection to communicate with one another. In the setup of Fig. 4, the devices A, B, C, D and E are allowed to communicate with one another.

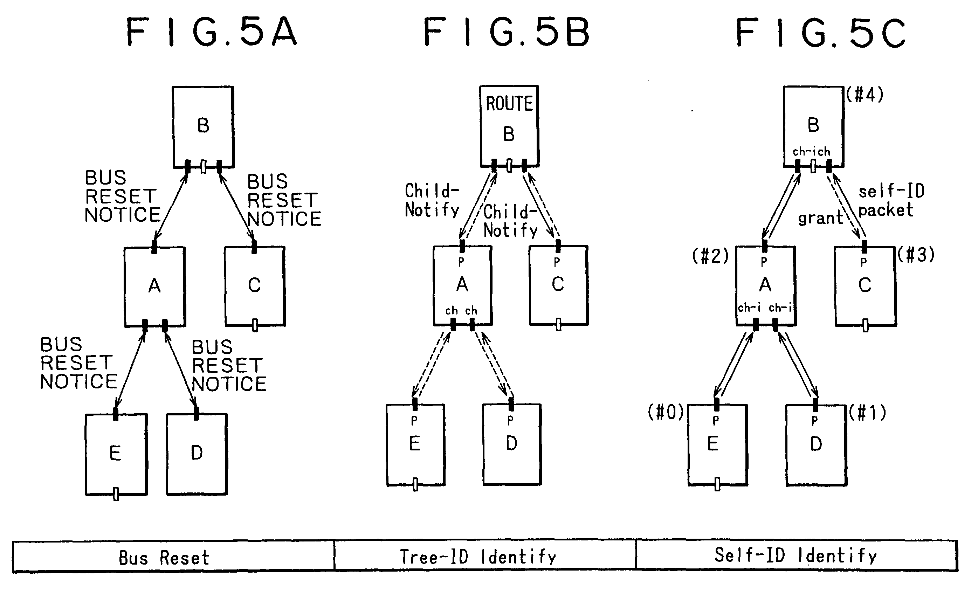

Within the system where a plurality of devices are connected by IEEE 1394 buses (the system is also called the IEEE 1394 system hereunder), each of the configured devices is assigned a node-ID in practice. The process of node-ID assignment is shown schematically in Figs. 5A, 5B and 5C.

In an IEEE 1394 system whose connection setup is shown in Fig. 5A, a bus reset is generated if a cable is connected or disconnected, if any one of the configured devices of the system is turned on or off, or if a spontaneous process takes place under PHY (Physical Layer Protocol). In such a case, a bus reset notice is sent to all devices A, B, C, D and E over the IEEE 1394 buses.

The bus reset notice triggers communications (called child-notify) that result in defining parent-child relations between adjacent devices as depicted in Fig. 5B. That is, a tree structure of the configured devices is built within the IEEE 1394 system. With the tree structure established, the device constituting a root of the tree is defined. The root is a device whose terminals are all defined as "children" (Ch). In the setup of Fig. 5B, the device B is defined as the root. In other words, a terminal of the device A connected to the device B as the root is defined as a "parent" (P).

When the tree structure and its root have been defined in the IEEE 1394 system as described above, each device then outputs a self-ID packet as a declaration of its own node-ID as shown in Fig. 5C. The root grants one node-ID after another to the connected devices, whereby addresses (node-IDs) of the devices constituting the IEEE 1394 system are determined.

### 1-5. Packets

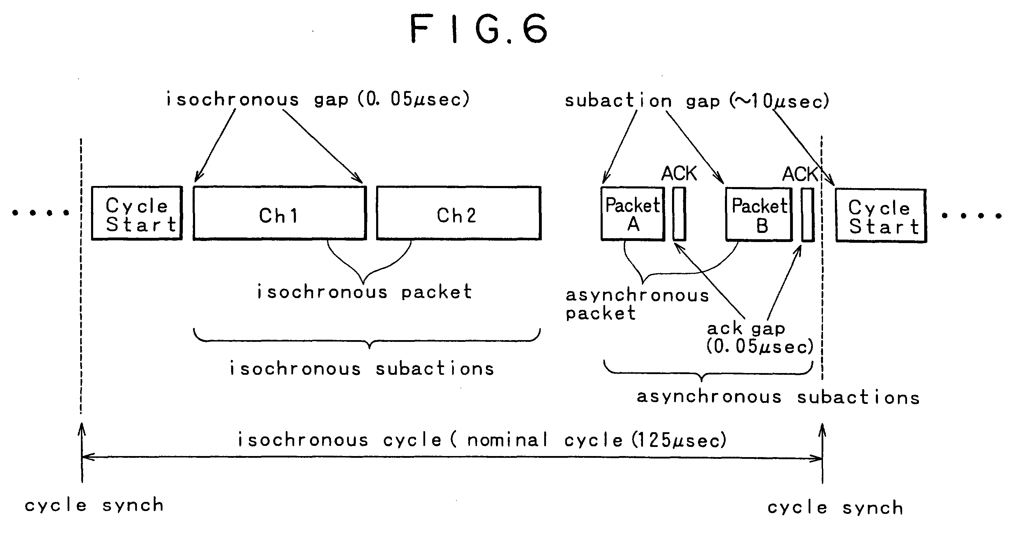

As shown in Fig. 6, the IEEE 1394 format effects data transmission through repeated isochronous cycles (nominal cycles). It is stipulated that each isochronous cycle lasts 125 microseconds on a frequency band of 100 MHz. It is also stipulated that the isochronous cycle may have a duration period other than 125 microseconds. For transmission, data are turned into packets in each isochronous cycle and then transmitted.

As illustrated in Fig. 6, each isochronous cycle is headed by a cycle start packet indicating the beginning of the cycle. When to generate cycle start packets is designated by a device defined as a cycle master in the IEEE 1394 system. Details of the cycle start packet generation will not be described further.

Each cycle start packet is followed preferentially by isochronous packets. As shown in Fig. 6, the isochronous packets correspond to a channel each and are transferred on a time division basis (in the form of isochronous subactions). In isochronous subactions, the packets are set apart by intervals called isochronous gaps (each lasting illustratively 0.05 microseconds).

As described, the IEEE 1394 system allows isochronous data to be transmitted and received over a single transmission line on a multi-channel basis.

Suppose that compressed audio data (called ATRAC data hereunder) compatible with the MD recorder/player of this embodiment are transmitted by the isochronous method. In that case, if ATRAC data are subject to a single-speed transfer rate of 1.4 Mbps, then time series continuity (i.e., real-time characteristic) is guaranteed by transmitting the data in isochronous packets of 20-odd megabytes per 125-microsecond isochronous cycle.

For example, before transmitting ATRAC data, a device requests an IRM (Isochronous Resource Manager) in the IEEE 1394 system to grant an isochronous packet size large enough to ensure real-time transmission of the data. In response, the IRM grants or withholds permission for the packet size by monitoring the current data transmission status. If permission is granted, the ATRAC data in question are transmitted in isochronous packets over specific channels. This procedure, of which details will not be described further, is called band reservation for the IEEE 1394 interface.

Frequency ranges not used for isochronous subactions over the isochronous cycle band are utilized for asynchronous subactions, i.e., for asynchronous transmission of packets.

Fig. 6 shows an example in which two asynchronous packets A and B are transmitted. The asynchronous packets are each followed by an ACK (acknowledge) signal, with an interval called an ack gap (0.05 microseconds long) interposed therebetween. An ACK signal is output by the receiving side (i.e., target) on a hardware basis informing the transmitting side (i.e., controller) that some asynchronous data have been received during an asynchronous transaction, as will be described later.

An interval called a subaction gap about 10 microseconds long is placed before and after each data transmission unit made of an asynchronous packet and an ACK signal.

Where arrangements are made to transmit ATRAC data in isochronous packets and to send auxiliary data files accompanying the ATRAC data in asynchronous packets, it is possible to transmit both the ATRAC data and the auxiliary data files in an apparently simultaneous fashion.

### 1-6. Transaction Rules

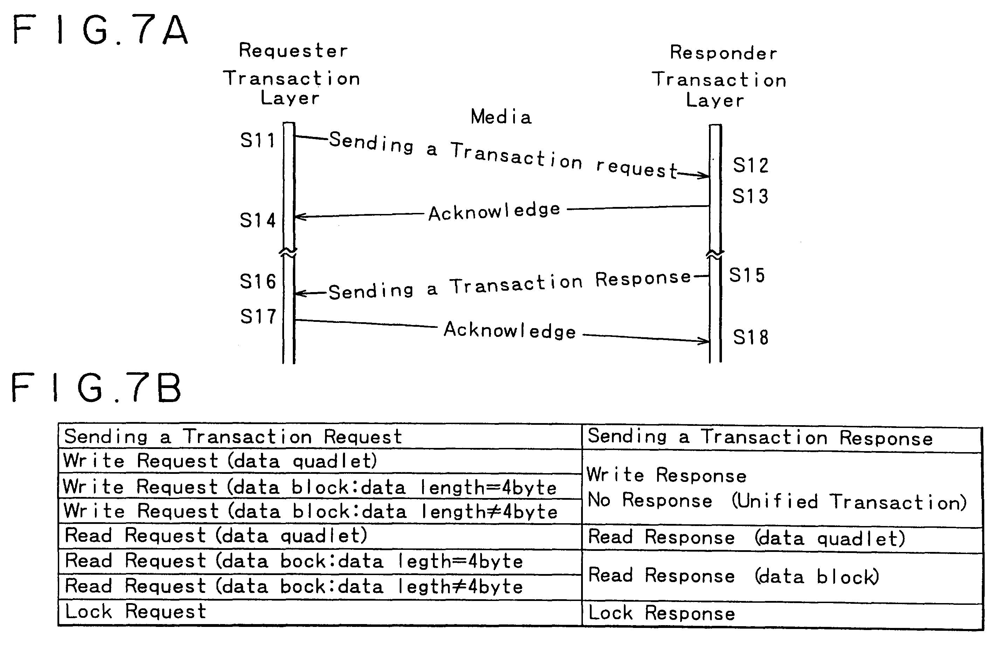

Fig. 7A is a process transition diagram showing basic transaction rules for asynchronous communication. The transaction rules are stipulated in compliance with the FCP.

As depicted in Fig. 7A, a requester (transmitting side) first sends a request to a responder (receiving side) in step S11. On receiving the request (in step S12), the responder sends an acknowledgement back to the requester (in step S13). When receiving the acknowledgement, the requester confirms that the request has been accepted by the responder (in step S14).

In turn, the responder sends a transaction response to the request from the requester (in step S15). Upon receipt of the response (in step S16), the requester returns an acknowledgement to the responder (in step S17). When receiving the acknowledgement, the responder verifies that its response has been received by the requester.

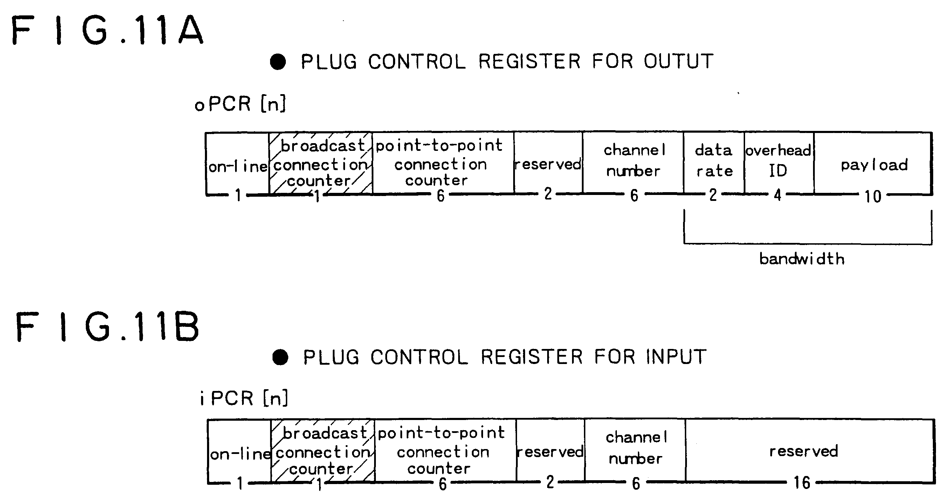

Request transactions shown transmitted in Fig. 11A fall into three categories: write requests, read requests, and lock requests, as listed in the left-hand part of the table in Fig. 7B.

Write requests are commands that designate data write operations. Read requests are commands that specify data read operations. Load requests, thought not discussed hereunder in detail, are commands for swap, compare, and mask operations.

The write requests are further grouped by the data size of the command (operand) in an asynchronous packet (AV/C command packet, to be described later with reference to figures) into three types. One write request type is a write request (data quadlet) for sending a command according to the header size alone in an asynchronous packet. The other two write request types are a write request (data block: data length = 4 bytes) and a write request (data block: data length ≠ 4 bytes). Each of the latter two write request types supplements a header of an asynchronous packet with a data block for command transmission. What makes the two write request types different from each other is that the data size of the operand placed in the data block is four bytes for one request type and something other than four bytes for the other.

As with the write requests, the read requests are further grouped by the data size of the operand in an asynchronous packet into three types: a read request (data quadlet), a read request (data block: data length = 4 bytes), and a read request (data block: data length ≠ 4 bytes).

Response transactions are listed in the right-hand part of the table in Fig. 7B. Either a write response or no response is defined as corresponding to any of the three write request types.

A read response (data quadlet) is defined as corresponding to the read request (data quadlet), and a read response (data block) as corresponding to the read request (data block: data length = 4 bytes) or to the read request (data block: data length ≠ 4 bytes).

A lock response is defined as corresponding to the lock request.

### 1-7. Addressing

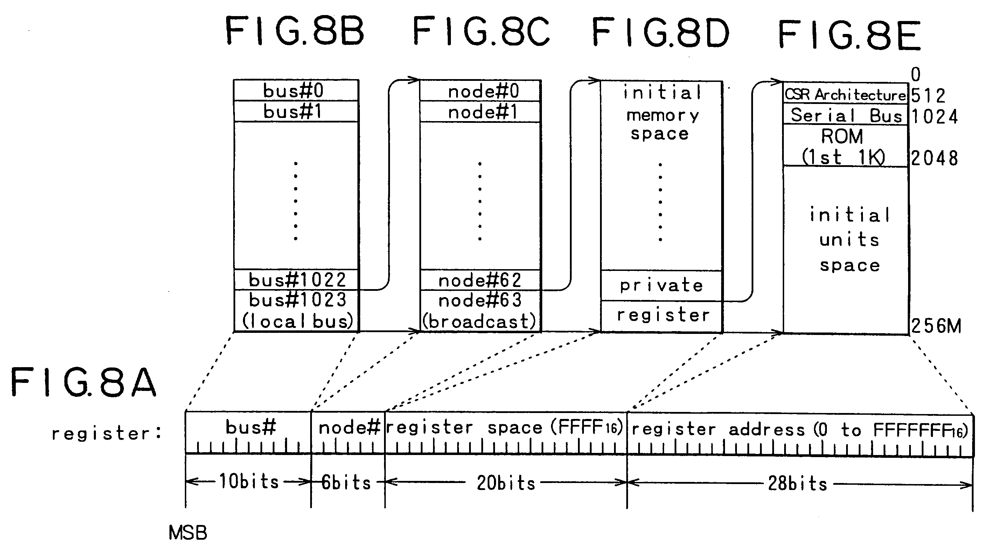

Fig. 8A through 8E show addressing structures of IEEE 1394 buses. As depicted in Fig. 8A, a 64-bit bus address register (address space) is provided in the IEEE 1394 format.

A high-order 10-bit region of the register designates a bus ID for identifying an IEEE 1394 bus. As shown in Fig. 8B, the region permits setting of up to 1,023 bus IDs for buses #0 through #1,022. Bus #1,023 is defined as a local bus.

A six-bit region following the bus address in Fig. 8A designates a node ID of a device connected to the IEEE 1394 bus identified by the bus ID. As depicted in Fig. 8C, the node ID permits identification by up to 63 node IDs numbered #0 through #62.

The 16-bit region comprising the bus ID and node ID above corresponds to a destination ID in a header of an AV/C command packet, to be described later. In the IEEE 1394 system, each device connected to a specific bus is identified by the bus ID and node ID.

A 20-bit region following the node ID in Fig. 8A constitutes a register space. The register space is followed by a 28-bit register address.

The register space has a value [F FF FFh] indicating the register shown in Fig. 8D. The content of this register is defined as depicted in Fig. 8E. The register address designates the address of the register shown in Fig. 8E.

In brief, addressing works as follows: information about an isochronous cycle time and free channels is obtained by referring to serial bus-dependent registers starting illustratively from address 512 [0 00 02 00h] in the register of Fig. 8E.

A reference to the content of a configuration ROM starting from address 1,024 [0 00 04 00h] permits recognition of a node type and a node-unique ID specific to that node type.

### 1-8. CIP

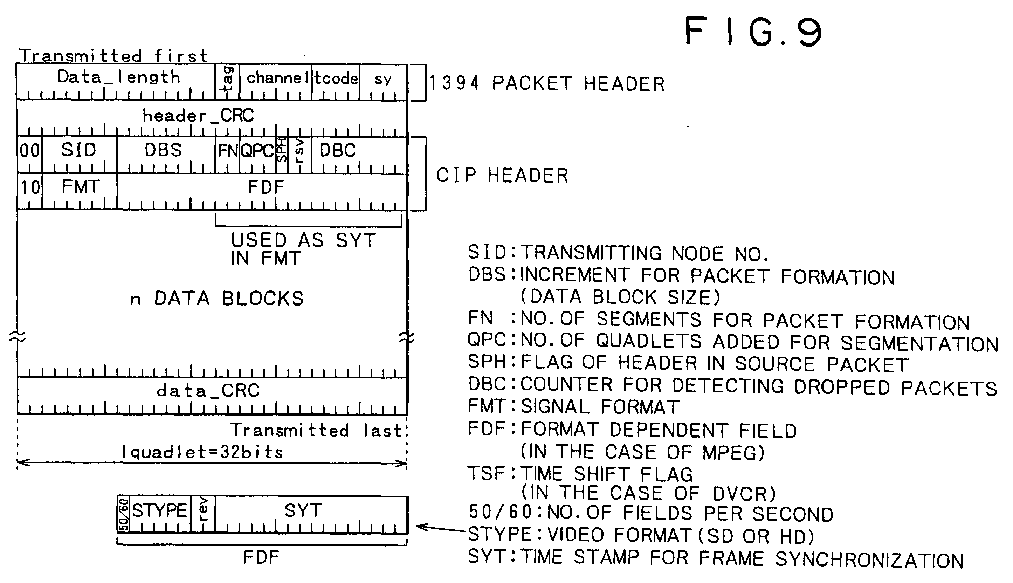

Fig. 9 illustrates a structure of a CIP (Common Isochronous Packet). This is a data structure of the isochronous packet shown in Fig. 6. In IEEE 1394-compatible communications, as mentioned above, ATRAC data (one type of audio data to be recorded and reproduced by the MD recorder/player of this embodiment) are transmitted and received by the isochronous method. That is, quantities of data sufficient to maintain the real-time characteristic are carried by isochronous packets that are transmitted one after another in isochronous cycles.

The first 32 bits (making up a quadlet) of the CIP constitute a 1394 packet header. In this packet header, a high-order 16-bit region indicates a data_length followed by a two-bit region that designates a tag. The tag is followed by a six-bit region designating a channel. The channel region is followed by a four-bit designating "tcode" which in turn is followed by a four-bit "sy" code. A quadlet region following the 1394 packet header contains a header_CRC.

A two-quadlet region following the header_CRC constitutes a CIP header. In the high-order quadlet of the CIP header, the most significant two bits are each filled with a "0". A six-bit region after the "00" bits indicates an SID (transmitting node number), followed by an eight-bit region designating a DBS (data block size, i.e., increment of data for packet formation). The DBS region is followed by an FN (of two bits) and a QPC (of three bits) region. The FN region denotes the number of segments for packet formation, and the QPC region represents the number of quadlets added for segmentation.

The QPC region is followed by an SHP (of one bit) region that indicates a flag of the header in a source packet. A DBC region contains a value of a counter for detecting dropped packets.

High-order two bits in the low-order quadlet of the CIP header are each filled with a "0". The "00" bits are followed by an FMT (of six bits) and an FDF (of 24 bits) region. The FMT region denotes a signal format (transmission format) whose value permits identification of a type of data (i.e., data format) placed in this CIP. More specifically, such data types as MPEG stream data, audio stream data, and digital video camera (DV) stream data may be identified by the FMT region. The data format given in the FMT region corresponds illustratively to a transmission protocol such as the SD-DVCR realtime transmission (502), HD-DVCR realtime transmission (503), SDL-DVCR realtime transmission (504), MPEG2-TS realtime transmission (505), or audio and music realtime transmission (506) under management of the CIP header format (501) shown in Fig. 1.

The FDF region is a format-dependent field designating a more detailed category of the data format classified by the FMT region. Illustratively, audio data may be identified in more detail as linear audio data or MIDI data.

For example, ATRAC data for use with this embodiment are first indicated as data falling under the category of audio stream data in the FMT region. With a predetermined value set to the FDF region, the audio stream data are further shown to be ATRAC data.

If the FMT region indicates MPEG data, then the FDF region holds synchronization control information called a TSF (Time Shift Flag). If the FMT region denotes DVCR (Digital Video Camera) data, the FDF region is defined as shown in the lower part of Fig. 9. This FDF region has a high-order 50/60 region (of one bit) designating the number of fields per seconds, followed by an STYPE region (of five bits) indicating whether the video format is SD or HD. The STYPE region is followed by an SYT region that provides a time stamp for frame synchronization.

Following the CIP header, the data indicated by the FMT and FDF regions are stored in a sequence of "n" data blocks. If the data are shown to be ATRAC data by the FMT and FDF regions, the data blocks contain the ATRAC data. The data blocks are terminated by a data_CRC region.

### 1-9. Connection Management

In the IEEE 1394 format, logical connections called "plugs" are used to define connective relations between devices connected by IEEE 1394 buses.

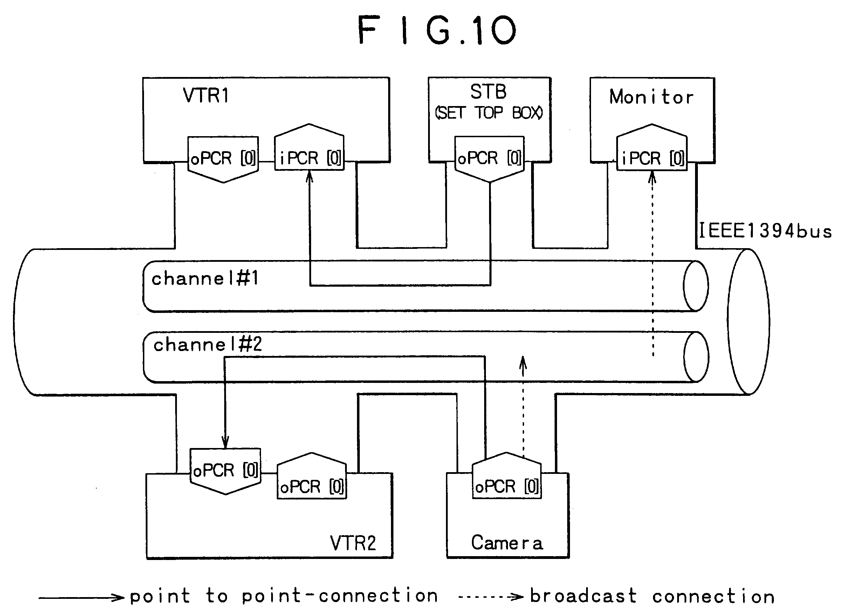

Fig. 10 shows a typical setup of connective relations defined by plugs. The setup constitutes a system having VTR1, VTR2, a set-top box (STB; digital satellite broadcast tuner), a monitor, and a digital still camera all connected via an IEEE 1394 bus.

There are two forms of plug-based IEEE 1394 connections: point-to-point connection, and broadcast connection.

The point-to-point connection specifies relations between a transmitting device and a receiving device. Data transmission takes place over a specific channel from the transmitting device to the receiving device.

On the other hand, the broadcast connection permits data transmission without requiring the transmitting device to specify receiving devices and channels to be utilized. The receiving devices receive the transmitted data without identifying the transmitting device and perform predetermined processes if so required by the content of the received data.

The setup of Fig. 10 shows two point-to-point connection states: one in which the STB send data and the VTR1 receives the data over channel #1, and the other in which the digital still camera sends data and the VTR2 receives the data over channel #2.

Also shown in Fig. 10 is a broadcast connection state for the digital still camera to transmit its data on a broadcasting basis. The broadcast data are shown being received by the monitor which in turn performs a predetermined response process.

The above connections (plugs) are established by a PCR (plug control register) included in an address space of each device configured.

Fig. 11A depicts a structure of a plug control register for output (oPCR[n]), and Fig. 11B indicates a structure of a plug control register for input (iPCR[n]). The registers oPCR[n] and iPCR[n] have a size of 32 bits each.

In the register oPCR of Fig. 11A, illustratively a "1" set to the most significant bit (on-line) indicates data transmission by broadcast connection; a "0" shows that data are transmitted by point-to-point connection over a channel whose channel number is set in a six-bit channel number region starting from the 11th bit relative to the MSB.

In the register iPCR of Fig. 11B, illustratively a "1" set to the most significant bit (on-line) indicates data reception by broadcast connection; a "0" shows that data are received by point-to-point connection over a channel whose channel number is set in a six-bit channel number region starting from the 11th bit relative to the MSB.

### 1-10. Commands and Responses under FCP

With this embodiment, transmission of auxiliary data by the asynchronous method is regulated under the FCP (402) shown in Fig. 1. Below is a description of a transaction for the transmission governed by the FCP.

A write transaction (see Fig. 7B) prescribed for the asynchronous method is used under the FCP. Auxiliary data are transmitted by this embodiment by utilizing write transactions for asynchronous communication in keeping with the FCP.

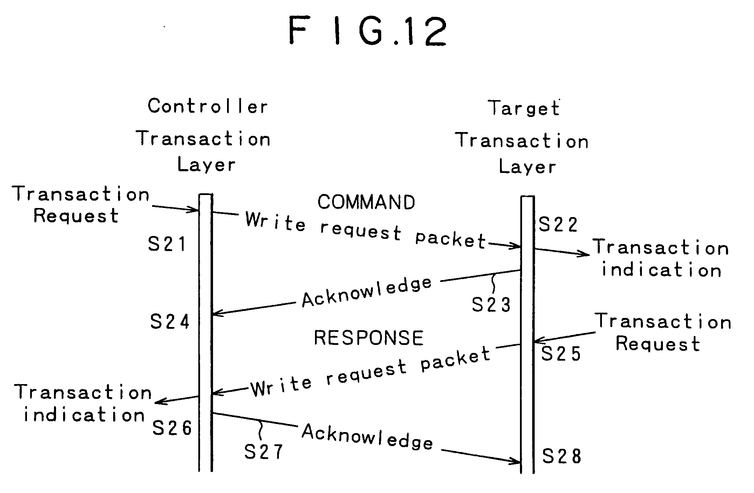

Each of the devices that support the FCP comprises a command/response register. A write transaction is implemented by writing a message to the command/response register as will be explained below with reference to Fig. 12.

Fig. 12 shows a process transition diagram wherein in step S21 a controller generates a transaction request and sends a write request packet to a target for a command transmission. In step S22, the target receives the write request packet and writes data to the command/response register. The target returns an acknowledgement to the controller in step S23, and the controller receives the acknowledgement in step S24. The steps so far constitute a command transmission process.

In a process responding to the command, the target transmits a write request packet (in step S25). On receiving the write request packet, the controller writes data to the command/response register (in step S26). With the write request packet received, the controller also transmits an acknowledgement to the target (in step S27). Receiving the acknowledgement allows the target to confirm that the write request packet has been received by the controller (in step S28).

That is, data transmission (transactions) according to the FCP is based on two processes: the process of command transmission from the controller to the target, and the process of response transmission from the target to the controller.

### 1-11. AV/C Command Packet

As described earlier in reference to Fig. 1, the FCP allows various AV devices to communicate by the asynchronous method using AV/C commands.

Three kinds of transactions, i.e., write, read and lock, are prescribed for asynchronous communication, as explained with reference to Fig. 7B. In practice, a write request/response packet, a read request/response packet, and a lock request/response packet are used in keeping with the different transactions. For the FCP, the write transaction is employed as described above.

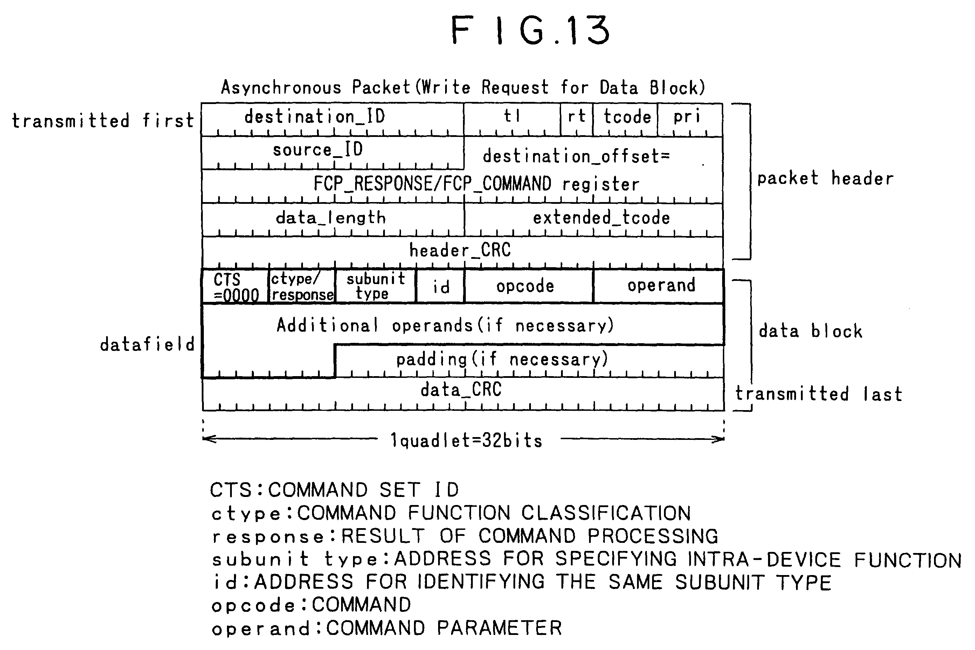

Fig. 13 shows a format of a write request packet (asynchronous packet (write request for data block)). This embodiment uses the write request packet as its AV/C command packet.

High-order five quadlets (i.e., the first through the fifth quadlets) in the write request packet constitute a packet header. A high-order 16-bit region in the first quadlet of the packet header denotes a destination_ID, i.e., an ID of a node serving as a data transfer destination. The destination ID region is followed by a six-bit "t1" (transact label) region representing a packet number. The six-bit region is followed by a two-bit "rt" (retry code) region indicating whether the packet in question is the initially transmitted packet or a retransmitted packet. The "rt" region is followed by a four-bit "tcode" (transaction code) region designating a command code. The "tcode" region is followed by a four-bit "pri" (priority) region indicating the priority of the packet.

A high-order 16-bit region in the second quadlet of the packet header denotes a source_ID, i.e., an ID of a node (node_ID) serving as a data transfer source.

A low-order 16-bit region in the second quadlet and the entire third quadlet, occupying a total of 48 bits, designate a destination_offset indicating two addresses: one for a command register (FCP_COMMAND register), and the other for a response register (FCP_RESPONSE register).

The destination_ID and destination_offset correspond to the 64-bit address space stipulated in the IEEE 1394 format.

A high-order 16-bit region in the fourth quadlet contains a data_length. This region designates the data size of a data region (data field), to be described later (shown enclosed by thick lines in Fig. 13). The data length region is followed by an extended_tcode region used when the transaction code is extended.

A 32-bit region making up the fifth quadlet indicates a header_CRC. This region contains a CRC-computed value to checksum the packet header.

Data blocks are arranged starting from the sixth quadlet following the packet header. A data field is formed at the beginning of data blocks.

High-order four bytes forming the data field heading the sixth quadlet describes a CTS (command and transaction set). The CTS region indicates an ID of a command set for the write request packet in question. For example, a CTS value of "0000" as shown in Fig. 13 defines the content of the data field as an AV/C command. In other words, the write request packet is identified as an AV/C command packet. Thus with this embodiment, the CTS region is filled with "0000" to let the FCP use AV/C commands.

A four-bit region following the CTS has a response written therein indicating the result (i.e., response) of a process corresponding to a "ctype" (command type, i.e., a command function classification) or to a command.

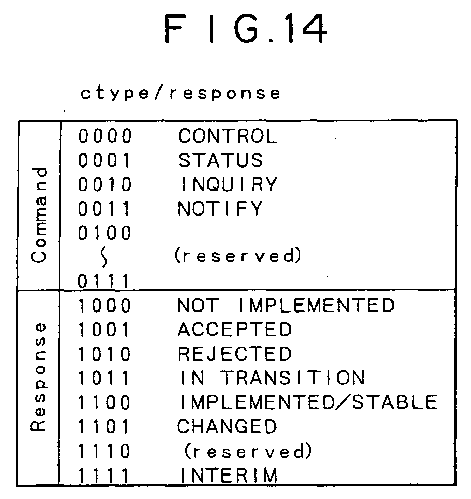

Fig. 14 lists definitions of the command types (ctype) and responses mentioned above. Values [0000] through [0111] are defined for use as "ctype" (commands). Specifically, the value [0000] is defined as CONTROL, [0001] as STATUS, [0010] as INQUIRY, and [0011] as NOTIFY. Values [0100] through [0111] are currently undefined (reserved).

CONTROL is a command used to control functions externally; STATUS is a command for inquiring status from the outside; INQUIRY is a command utilized to inquire externally the presence or absence of support for control commands; and NOTIFY is a command employed to request that an external entity be notified of status change.

Values [1000] through [1111] are defined for use as responses. Specifically, the value [1000] is defined as NOT IMPLEMENTED; [1001] as ACCEPTED; [1010] as REJECTED; [1011] as IN TRANSITION; [1100] as IMPLEMENTED/STABLE; [1101] as CHANGED; [1110] as reserved; and [1111] as INTERIM.

The responses above are used selectively depending on the command type. For example, one of four responses NOT IMPLEMENTED, ACCEPTED, REJECTED and INTERIM is employed selectively depending on the status of the responder.

In Fig. 13, the ctype/response region is followed by a five-bit region that contains a subunit type. The subunit type designates a subunit (device) that serves as a destination of command transmission or as a source of response transmission. In the IEEE 1394 format, each device is called a unit and a functional unit within the unit is called a subunit. Illustratively, a typical VTR as a unit comprises two subunits: a tuner for receiving terrestrial and satellite broadcasts, and a video cassette recorder/player.

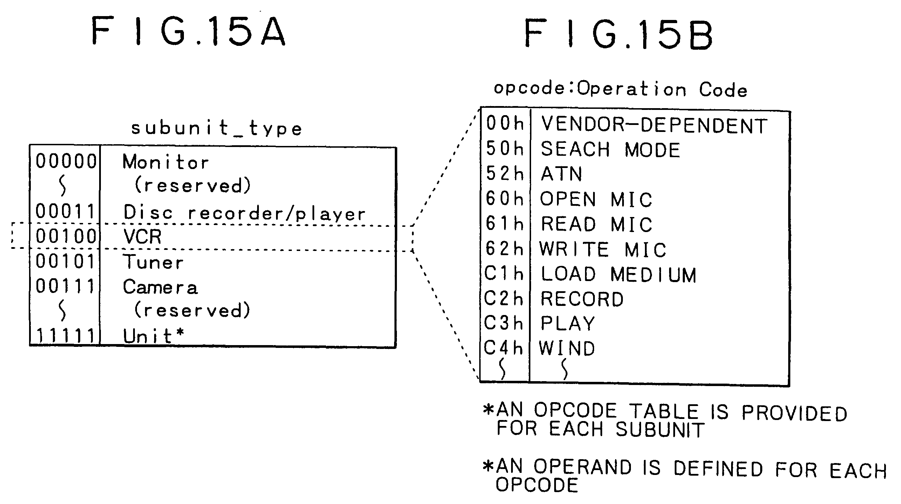

Subunit types are defined illustratively as shown in Fig. 15A. Specifically, a value [00000] is defined as a monitor while [00001] through [00010] are reserved. A value [00011] is defined as a disc recorder/player, [00100] as a VCR, [00101] as a tuner, [00111] as a camera, and [01000] through [11110] are reserved. A value [11111] is defined as a unit for use where no subunit exists.

In Fig. 13, a three-bit region following the subunit type region contains an "id" (node_ID) for identifying a subunit if there exist a plurality of subunits of the same type.

An eight-bit region following the "id" (node ID) region contains an opcode which in turn is followed by an operand. The opcode stands for an operation code. The operand contains information (parameter) needed by the opcode. Opcodes are defined for each subunit in an opcode list table specific to the subunit in question. Illustratively, if the subunit is a VCR, diverse commands such as PLAY (playback) and RECORD (recording) are defined for the subunit as shown in Fig. 15B. An operand is defined for each opcode.

A 32-bit region constituting the sixth quadlet in Fig. 13 is a mandatory data field. If necessary, operands may be added after this data field (shown as additional operands).

The data field is followed by a data_CRC region. Padding may be placed before the data_CRC region where necessary.

### 1-12. Plugs

Described below is general information about plugs in the IEEE 1394 format. As described above with reference to Figs. 11A and 11B, plugs represent logical connections between devices in keeping with the IEEE 1394 format.

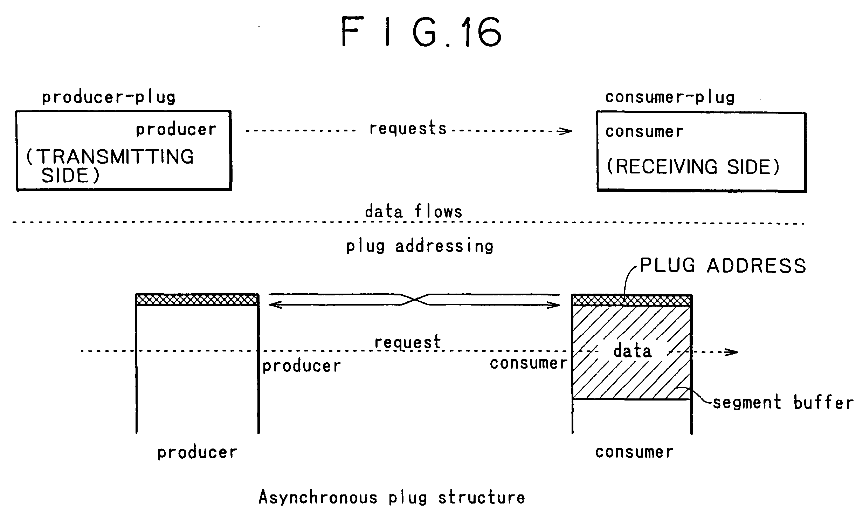

Data such as commands (requests) effective in asynchronous communication are sent from a producer to a consumer, as illustrated in Fig. 16. The producer stands for a device acting as a transmitter and the consumer denotes a device serving as a receiver in accordance with the IEEE 1394 interface. The consumer has a segment buffer, shown shaded in Fig. 16, which accommodates data written by the producer.

In the IEEE 1394 system, information for designating specific devices as the producer and consumer (the information is called connection management information) is retained at predetermined plug address locations indicated by braided lines in Fig. 16. The segment buffer is located following the plug address.

The range of segment buffer addresses to which the consumer may write data (the range thus denotes a recordable data quantity) is prescribed by a limit count register managed on the consumer side, as will be described later.

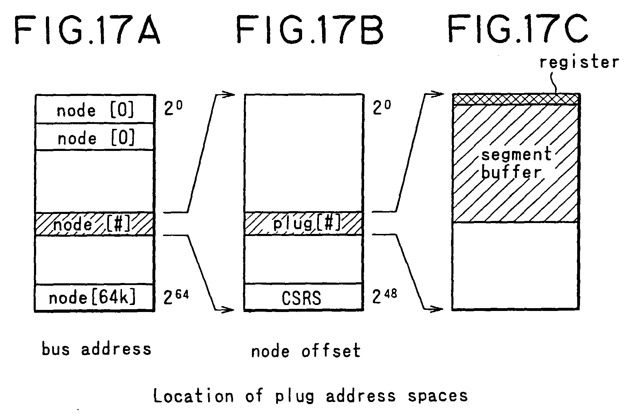

Figs. 17A, 17B and 17C depict a structure of plug address spaces for asynchronous communication. A 64-bit plug address space is divided as shown in Fig. 17A into as many as 216 (64K) nodes, in such a manner that a plug is found in the address space of each node as depicted in Fig. 17B. Each plug includes a register indicated by braided lines and a segment buffer shown shaded as illustrated in Fig. 17C. The register accommodates information (e.g., transmitted data size and receivable data size) necessary for exchanging data between the transmitting side (producer) and the receiving side (consumer), as will be explained later. The segment buffer is an area to which to write the data sent from the producer to the consumer. It is stipulated illustratively that a minimum segment buffer size is 64 bytes.

Fig. 18A shows a typical plug address whose content is the same as that in Fig. 17C. As shown in Fig. 18A, a plug address is headed by the register which is followed by the segment buffer.

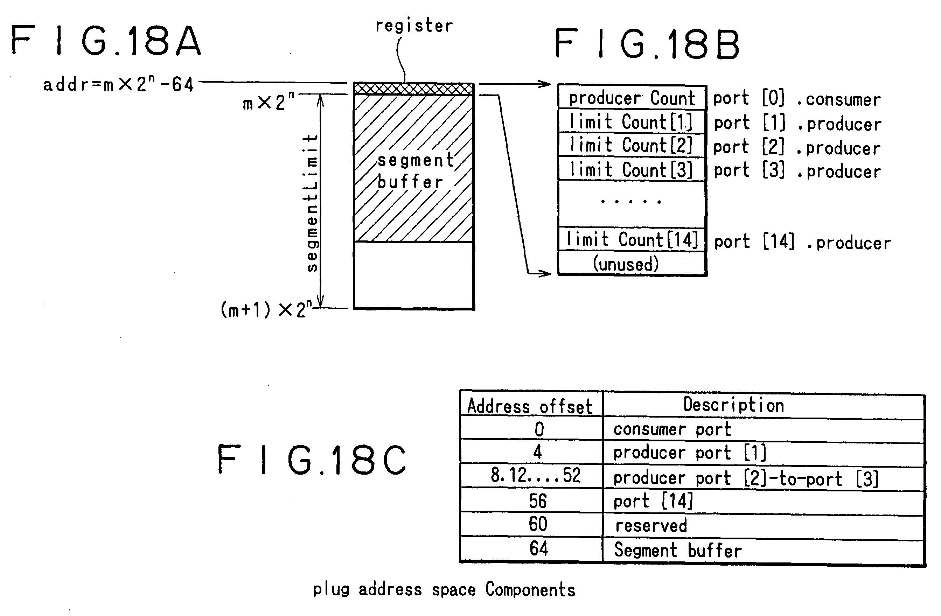

An internal structure of the register, as indicated in Fig. 18B, is headed by a 32-bit producer count register followed by limit count registers [1] through [14] of 32 bits in size each. That is, one producer count register and 14 limit count registers make up the register. In this structure, an unused region comes behind the limit count register [14].

The plug structure illustrated in Figs. 18A and 18B is designated by offset addresses shown in Fig. 18C. Offset address 0 specifies a consumer port (producer count register) while offset addresses 4, 8, 12 through 56, and 60 designate producer ports [1] through [14]. Offset address 60 is reserved, meaning a region unused and 64 designates a segment buffer.

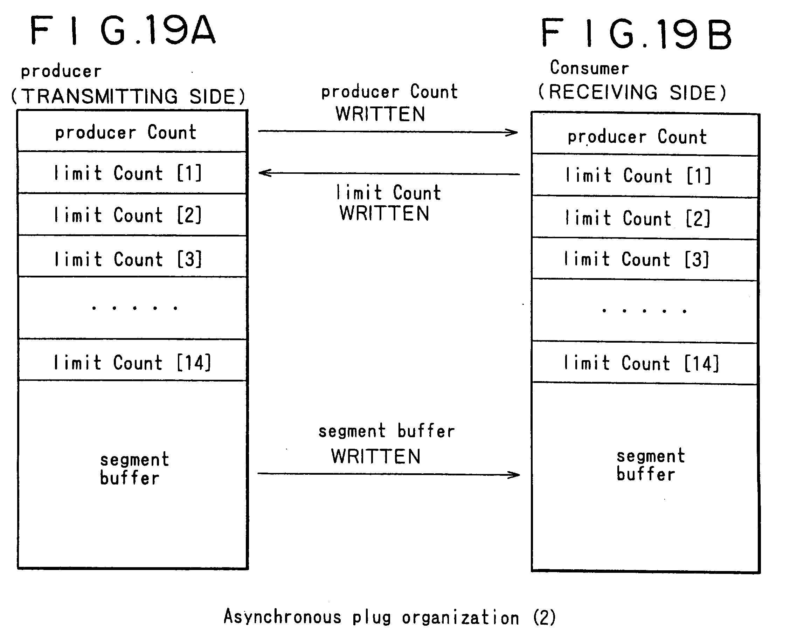

Figs. 19A and 19B show plug structures for both the producer and the consumer. With such plug structures in effect, asynchronous communication is implemented by writing data to the producer count register, to the limit count registers and to the segment buffer in keeping with data exchange procedures which will be described later. The write operations fall under the category of the write transaction described above.

The producer writes data to the producer count register of the consumer. More specifically, the producer first writes information about data transmission on the producer side to the producer count register at an address specific to the producer. The content of the producer count register is then written to the producer count register on the consumer side.

The producer count register accommodates the size of data to be written in a single write operation by the producer to the segment buffer of the consumer. That is, the producer that writes data to the producer count register performs a process of reporting the size of data to be written to the consumer segment buffer.

In response, the consumer writes data to the limit count registers of the producer. More specifically, the consumer first writes the size of its segment buffer to one of the limit count registers [1] through [14] (register [n]) which is designated corresponding to the producer. The content of the limit count register [n] is then written to the limit count register [n] of the producer.

In accordance with the data written to its limit count register [n], the producer determines the size of data to be written in a single write operation illustratively to its own segment buffer. The content of the segment buffer is in turn written to the segment buffer of the consumer. The write operation to the consumer segment buffer constitutes a data transmission of asynchronous communication. 1-13. Asynchronous Connection Transmission Procedures

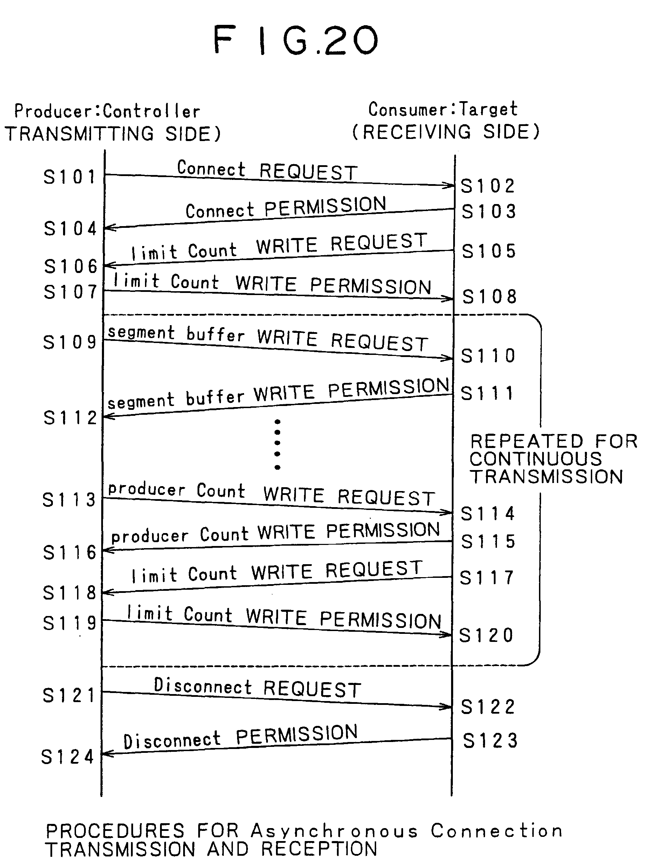

Described below with reference to a process transition diagram in Fig. 20 are basic procedures for transmission and reception by asynchronous connection where the inter-plug (i.e., producer-consumer) structure of Figs. 19A and 19B is assumed to be established.

The transmission and reception procedures shown in Fig. 20 are implemented using AV/C commands (write request packets) in an environment stipulated by the FCP for asynchronous communication. Auxiliary data handled by this embodiment are transmitted and received by use of the procedures within the IEEE 1394 system. It should be noted that the processing shown in Figs. 19A and 19B indicates only communicating operations by means of asynchronous connection; a communication process addressing the recording and playback of auxiliary data will be described later.

In an actual asynchronous connection setup, acknowledgements are sent and received following command transmissions as shown in Fig. 12. The setup of Fig. 20 omits illustration of acknowledgement exchanges for purpose of simplification.

For the IEEE 1394 interface, inter-plug (i.e., device-to-device) connective relations include controller-target relations in addition to the above-described producer-consumer relations. In the IEEE 1394 system, the devices established in producer-consumer relations may or may not coincide with the devices that are arranged in controller-target relations. In other words, there may exist a device stipulated to offer controller functions in addition to the devices designated as producers. In this example, however, it is assumed that the producer-consumer relations coincide with the controller-target relations.

In step S101 in the transmission procedures of Fig. 20, a producer transmits a connect request to a consumer. The connect request is a command sent by the producer to the consumer for requesting a connection therebetween. The command informs the consumer of a register address of the producer.

The connect request is received by the consumer in step S102, whereupon the consumer recognizes the address of the register on the producer side. In step S103, the consumer transmits in response a connect permission to the producer. Upon receipt of the connect permission by the producer in step S104, a connection is established between the producer and the consumer for subsequent data transmission and reception thereby.

With the connection set up as described above, the consumer transmits a limit count register (abbreviated to the limit count hereunder) write request to the producer in step S105. After receiving the limit count write request in step S106, the producer transmits a limit count write permission to the consumer in step S107. In step S108, the consumer receives the limit count write permission. The sending of the limit count write request followed by the write permission is a process that determines the size of data to be written later to the segment buffer (i.e., segment buffer size).

In step S109, the producer transmits a segment buffer write request to the consumer. The segment buffer write request is received by the consumer in step S110. In response, the consumer transmits a segment buffer write permission to the producer in step S111. The producer receives the segment buffer write permission in step S112.

Carrying out steps S109 through S112 completes a single process of writing data from the segment buffer of the producer to the segment buffer of the consumer.

In steps S109 through S112, the data are written by transmission of a single asynchronous packet shown in Fig. 6. If the data size transferred in an asynchronous packet is less than the data size designated by the limit count register and if the transmission of the necessary data is not complete using the single asynchronous packet, then steps S109 through S112 are repeated until the segment buffer capacity is fully taken up.

When the write operation to the segment buffer is completed in steps S109 through S112, step S113 is carried out in which the producer transmits a producer count register (abbreviated to the producer count hereunder) write request to the consumer. The consumer receives the producer count write request in step S114 and performs a write operation to its producer count register. In step S115, the consumer transmits a producer count write permission to the producer. The producer receives the producer count write permission in step S116.

The process above notifies the consumer of the data size transferred in steps S109 through S112 from the producer to the consumer segment buffer.

In step S117, a process is initiated to perform a limit count write operation following the producer count write process made up of steps S113 through S116. Specifically, as shown in steps S117 through S120, a limit count write request is transmitted from the consumer to the producer. In response, the producer transmits a limit count write permission to the consumer.

Steps S109 through S120 above constitute a single set of procedures for data transmission by asynchronous connection. If the size of data to be transmitted is greater than the segment buffer size and if the transmission of the data is not complete in the single series of steps S109 through S120, then steps S109 through S120 are repeated until the data transmission is completed.

When the data transmission is completed, the producer in step S121 transmits a disconnect request to the consumer. The consumer receives the disconnect request in step S122, and transmits a disconnect permission in step S123. The producer receives the disconnect permission in step S124, which completes the data transmission and reception by asynchronous connection.

### 2. Typical System Configuration Embodying the Invention

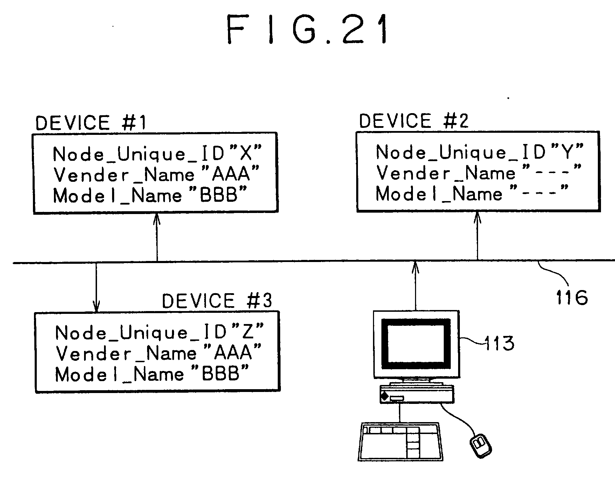

Fig. 21 shows a typical AV system embodying the invention and comprising the above-described IEEE 1394 interface.

The AV system of this embodiment has a personal computer 113 and three pieces of audio equipment shown as devices #1, #2 and #3 connected via a IEEE 1394 bus 116 for intercommunication.

The actual cable connections between the system components need only obey the bus connection rules discussed in connection with Fig. 4.

Devices #1, #2 and #3 are not limited to any specific type of equipment. In this example, it is assumed that device #1 is an MD recorder/player, device #2 is a CD player and device #3 is another MD recorder/player.

As is well known, the MD recorder/player is a recording and reproducing apparatus capable of recording and reproducing audio data to and from a magneto-optical disc known as the Mini-disc (MD; registered trademark). The CD player is audio equipment for reproducing digital audio data from a compact disc (CD).

Audio data retrieved by the CD player from the CD are output through the IEEE 1394 bus 116. The MD recorder/player retrieves audio data from the MD and demodulates the retrieved data for transfer to the outside via the IEEE 1394 bus 116. In addition, the MD recorder/player receives audio data sent from the outside through the IEEE 1394 bus 116 and records the received data to the MD. This applicant proposed elsewhere an MD recorder/player capable of recording text and still picture data files (called auxiliary data) along with audio data. Such an MD recorder/player may reproduce auxiliary data from the MD for transfer to the outside, as well as receive externally supplied auxiliary data and write them to the MD.

Where the AV system comprises the CD player and MD recorder/players as described above, digital audio data reproduced by the CD player may be sent out via the IEEE 1394 bus and recorded to the MD recorder/player in what may be called digital dubbing.

In such a case, the personal computer 113 controls the devices connected to the IEEE 1394 bus (under remote control) and, in operation, may receive user data such as audio data sent from any one of the configured devices and store the received data for subsequent data editing and processing. It is also possible to get the personal computer 113 to transmit various kinds of user data to other configured device.

Illustratively, in the AV system configuration of Fig. 21, the above-mentioned digital dubbing from the CD player to the MD recorder/player may be placed under remote control by the personal computer 113.

These functions of the personal computer 113 may be implemented illustratively by an internal CPU carrying out application programs designed specifically to realize such functionality.

Each device compatible with the IEEE 1394 data interface is required to have its vender name and model name set beforehand as a node unique ID and a subunit ID illustratively in an internal ROM. When the device in question is actually connected to an IEEE 1394 bus, the node unique ID and subunit ID are needed to establish connective relations of the device within the setup.

Each device has its own node unique ID which is eight-byte device identification information. No two devices share the same node unique ID even if they are of the same model.

A vender name constitutes information denoting the manufacturer of a given device, and a model name is information about the model of the device. It follows that there do exist devices sharing the same vender name and the same model name.

When it comes to identifying each device, the node unique ID is mandatory but the vender name and model name are optional and may or may not be attached to the device in question.

In the system of Fig. 21, the MD recorder/player as device #1 is assumed to have:
Node Unique ID = "X"
Vender Name = "AAA"
Model Name = "BBB"
The CD player as device #2 is assumed to have:
Node Unique ID = "Y"
Vender Name = "---"
Model Name = "---"
That is, neither vender name nor model name is currently set for the CD player.

The MD recorder/player as device #3 is assumed to have:
Node Unique ID = "Z"
Vender Name = "AAA"
Model Name = "BBB"
Because devices #1 and #3 each representing an MD recorder/player share the same vender name and the same model name, they are understood to be of the same model from the same manufacturer. The IDs and names above are shown comprising not actually used text but only characters for illustration purposes.

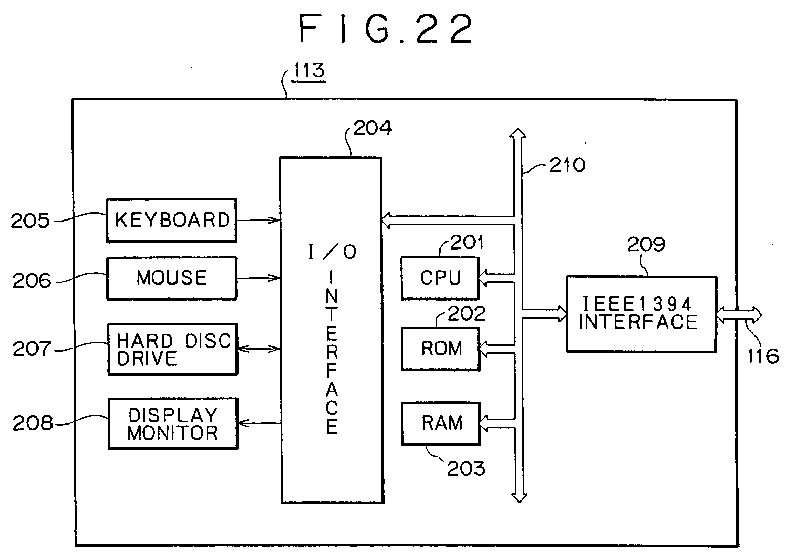

Fig. 22 shows a typical configuration of the personal computer 113. As illustrated, the personal computer 113 comprises an IEEE 1394 interface 209 for exchanging data with an external entity. When connected to the IEEE 1394 bus 116 used as an external data bus, the IEEE 1394 interface 209 permits intercommunication with externally connected devices.

The IEEE 1394 interface 209 demodulates packets received over the IEEE 1394 bus 116, extracts data from the received packets, converts the extracted data to a data format compatible with internal data communication, and outputs the converted data to a CPU 201 through an internal bus 210.

Furthermore, the IEEE 1394 interface 209 admits output data under control of the CPU 201, subjects the data to modulation processes based on an IEEE 1394 format such as conversion into packets, and transmits the modulated data to the outside over the IEEE 1394 bus 116.

The CPU 201 carries out a number of processes in accordance with programs retained illustratively in a ROM 202. This embodiment has in its ROM 202 programs for controlling the IEEE 1394 interface 209 to permit data exchanges in keeping with the IEEE 1394 criteria. That is, the personal computer 113 has a set of hardware and software for enabling data exchanges under the IEEE 1394.

A RAM 203 accommodates as needed data and programs for allowing the CPU 201 to execute various processes.

An input/output interface 204 is connected to a keyboard 205 and a mouse 206. Operation-induced signals from these components are forwarded through the interface 204 to the CPU 201. The I/O interface 204 is also connected to a hard disc drive 207 containing hard discs as a storage medium. Through the I/O interface 204, the CPU 201 may write and read data and programs to and from the hard discs in the hard disc drive 207. In this setup, the I/O interface 204 is further connected to a display monitor 208 for picture display.

The internal bus 210 is constituted illustratively by a PCI (Peripheral Component Interconnect) bus or by a local bus. As such, the internal bus 210 provides interconnections between the internal function circuits.

In the MD recorder/players and CD player 100 shown in Fig. 21, their IEEE 1394 interfaces adopt basically the same functional structure as that of the personal computer 113 described above.

More specifically, the MD recorder/players and CD player include an IEEE 1394 interface each, and have in their internal ROMs programs for allowing their internal CPUs to control their IEEE 1394 interfaces.

The system configuration of this embodiment wherein the components are interconnected by means of IEEE 1394 bus lines has been described only for illustrative purposes and is not limitative of the invention. Alternative AV system configurations may illustratively include a digital satellite broadcast receiver called IRD and a digital VTR (video tape recorder). The AV system of the invention need not be limited in structure to the MD recorder/players and CD player shown in Fig. 21, so that internal structures of these components will not be described or illustrated further.

### 3. Typical Displays by Personal Computer

In the AV system of Fig. 21, the personal computer 113 is assumed to have functions (based on application software) for managing and controlling devices connected to the IEEE 1394 bus. One such managing and controlling function may illustratively constitute a display feature for indicating on a screen the devices currently connected to the IEEE 1394 bus.

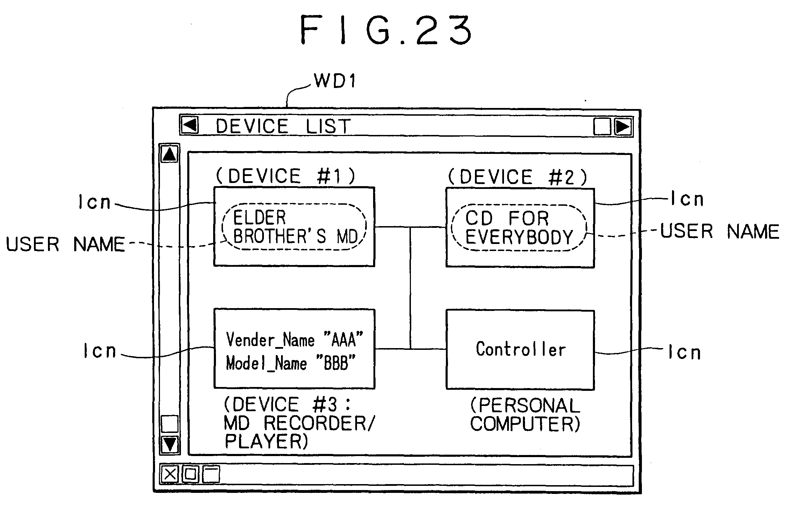

Fig. 23 shows a typical device list window WD1 indicating a list of devices connected to the IEEE 1394 bus. The device list window WD1 appears illustratively on the display monitor 208.

In Fig. 23, devices #1, #2 and #3 as well as the personal computer 113 are each indicated by a device icon ICN shaped as a rectangular box on the screen. The device icons ICN are shown interconnected by lines in a way reflecting the actual interconnections between the devices #1 through #3 and personal computer 113 by way of the IEEE 1394 bus. That is, the bus connections described in connection with Fig. 21 are graphically displayed on the screen.

The personal computer 113 of this embodiment allows users to input text information, in a manner to be described later, with regard to each device connected to the IEEE 1394 bus, whereby device names are entered and set as desired. In the description that follows, a name given by a user to each device will be called a "user name".

When any device has its user name already entered, that user name is displayed inside the device icon ICN representing the device in question.

In the example of Fig. 23, the MD recorder/player as device #1 and the CD player as device #2 have their user names previously entered. More specifically, a user name "Elder Brother's MD" is displayed inside the device icon ICN of device #1, and a user name "CD for Everybody" is shown inside the device icon ICN of device #2.

It is assumed here that a user name for the MD recorder/player as device #3 has yet to be entered. In such a case, the window may display in alphanumeric characters the vender name and model name of the MD recorder/player inside its device icon ICN as a temporary measure for recognition by the user. Alternatively, a node unique ID of the device may be displayed in place of its vender name and model name. As another alternative, characters or symbols may be used to indicate a device type (e.g., MD recorder/player or CD player) derived from a vender name, a model name or other ID information.

The device icon ICN denoting the personal computer 113 in the above setup shows a character string "Controller" indicating that the computer is functioning as the controller of an IEEE 1394 data interface system. It is also possible for the user to enter a desired user name with regard to the personal computer 113; the entered user name will then appear inside the device icon ICN of the computer 113.

Suppose now that looking at the window in Fig. 23, the user wants to enter a user name into the device icon ICN corresponding to device #3 for which no user name has been set so far.

In that case, the user may first select the device icon ICN of device #3 by operating illustratively a mouse in the device list window WD1, and then call up a user name entry menu from the so-called window menu.

Once the user name entry menu is invoked, a dialog window, not shown, appears for the user to enter a user name therein. The user inputs a desired user name by operating illustratively a keyboard and confirms the entry. This establishes the user name corresponding to device #3.

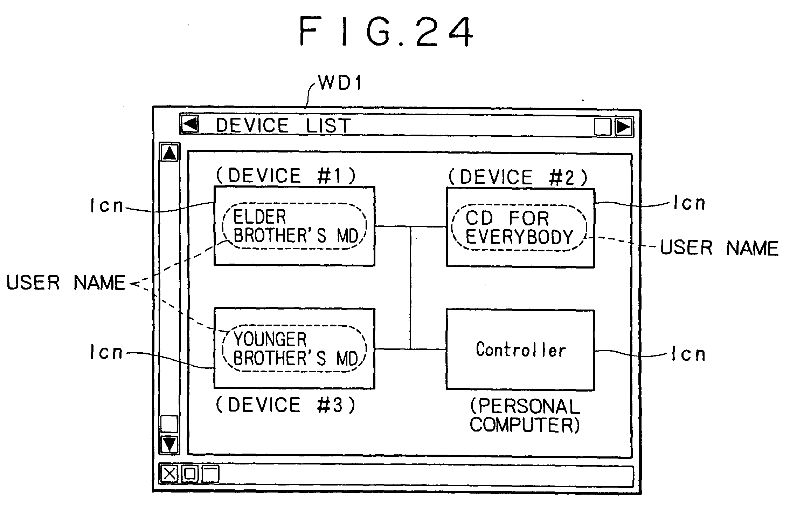

Following the user name entry, the device list window WD1 has its contents replaced by what is shown in Fig. 24. As illustrated, the user name just entered by the user is indicated inside the device icon ICN of device #3. In the example of Fig. 24, a user name "Younger Brother's MD" is shown within the device icon ICN corresponding to device #3. This is the character string entered by the user at the time of the user name entry.

Existing user names may be updated as needed by carrying out steps similar to those described above.

Under control of the personal computer 113 of the above embodiment, the user names entered as described are managed as follows:

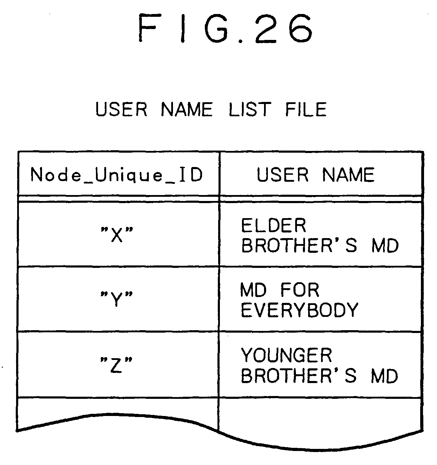

Where user names corresponding to some of the connected devices have been entered in the manner described, the CPU 11 creates a user name list file such as the one shown in Fig. 26.

The user name list file in Fig. 26 corresponds to the contents indicated in Fig. 24.

In the user name list file, the entered user names are stored corresponding to the node unique ID of each of the devices involved.

In Fig. 26, the node unique ID "X" of device #1 is shown set in combination with text information "Elder Brother's MD," a user name entered with regard to device #1.

The node unique ID "Y" of device #2 is set in combination with text information "CD for Everybody," a user name entered with respect to device #2.

The node unique ID "Z" of device #3 is set in combination with text information "Younger Brother's MD," a user name entered corresponding to device #3.

The user name list file thus created is managed illustratively as a file that is written to the hard disc drive 207 for storage.

As can be seen from the user name list file structure, the user name of each device is managed as proper information for matching the user name with the node unique ID.

In other words, the user names entered with this embodiment are effective not on a temporary basis but for extended management. By referring to a previously entered user name in the user name list file on the hard disc, the user is able to identify the corresponding device at all times.

If a bus reset is generated with a device connected or disconnected to or from the IEEE 1394 bus in the embodiment, the user names corresponding to the connected devices on the bus are always displayed.

For example, suppose that after devices #1, #2 and #3 as well as the personal computer 113 are configured as shown in the device list window WD1 of Fig. 24, the cable of device #3 is disconnected, leaving devices #1 and #2 and the personal computer 113 still connected to the IEEE 1394 bus. In that case, the cable disconnection generates a bus reset in the IEEE 1394 system.

Following the bus reset, the personal computer 113 acquires a node unique ID of each of the connected devices. The computer then references the acquired node unique IDs in the user name list file to retrieve from there the corresponding user names for display. With the connective relations of the devices established anew, the user can look at the displayed user names and recognize the devices currently connected to the IEEE 1394 bus.

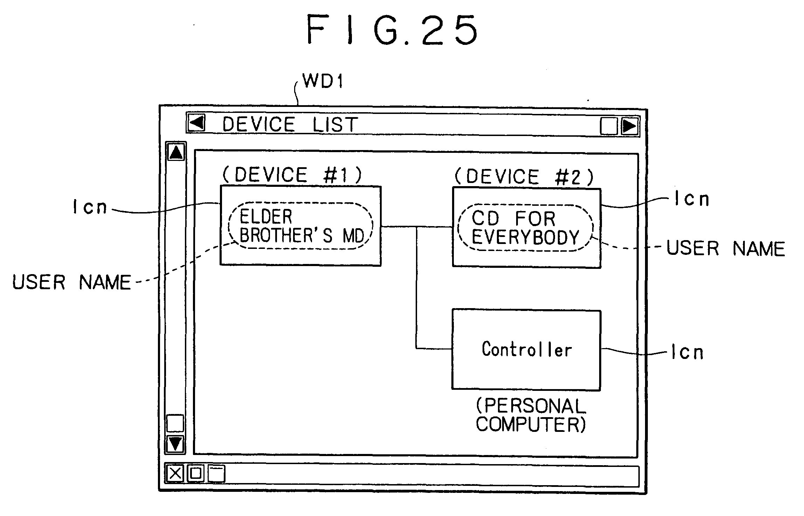

Illustratively, if the device list window WD1 is displayed following the above bus reset, the contents of the window in Fig. 24 are replaced by those in Fig. 25.

In the window of Fig. 25, the indication of device #3 has disappeared while the device icons ICN of devices #1 and #2 as well as the personal computer 113 are displayed. The window shows how the remaining three devices are interconnected by bus lines.

Inside each of the device icons ICN representing devices #1 and #2, the same user names "Elder Brother's MD" and "CD for Everybody" in effect before the bus reset are again indicated correctly.

Suppose that in the connection setup of the device list window WD1 in Fig. 25, another bus reset is generated upon connection to the bus of the cable of the MD recorder/player as device #3. In that case, the node unique IDs of the devices currently connected to the IEEE 1394 bus are acquired anew and are referenced in the user name list file so as to display the corresponding user names. Looking at the displayed user names, the user can recognize the configured devices. The device list window WD1 in Fig. 24 can then be displayed again.

The display forms of the device list window WD1 in Figs. 23 through 25 are not limitative of the invention. Various other displays may be conceived and utilized alternatively.

### 4. Processes

Typical processing steps to perform the above-described entry of user names and to display a device list window WD1 upon generation of a bus reset are described below.

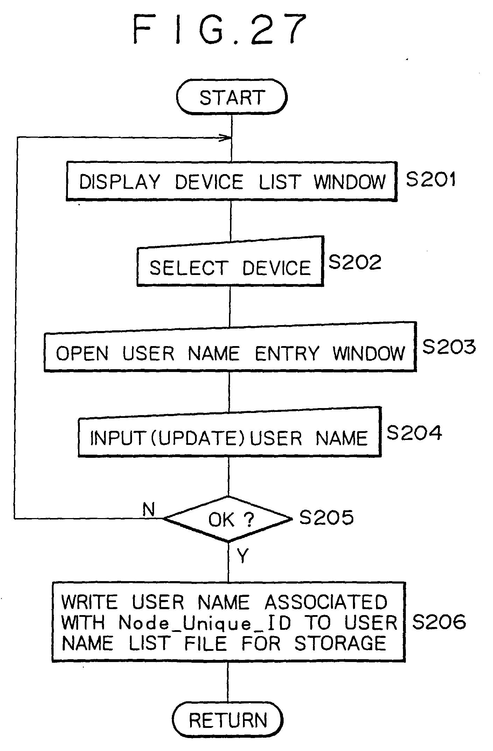

Steps to enter user names will now be described with reference to the flowchart of Fig. 27. These steps are performed by the CPU 201 of the personal computer 113.

In step S201 of Fig. 27, a display control process is carried out to display the device list window WD1.

In step S202, the user performs a suitable operation to select within the device list window WD1 a target device for user name entry. In response, the CPU establishes the device to be given a user name.

In step S203, a user name entry menu is opened in response to the user's appropriate operation to designate the opening. At this point, as mentioned above, a user name entry window is displayed.

A user name entry dialog window then appears. In step S204, the user either inputs a desired user name or updates an existing user name, the name being thereupon accepted by the CPU. In step S205, a check is made to see if the user has confirmed the name input. If the user name input is not confirmed, e.g., if the user name entry menu is canceled, then step S201 is reached again. In that case, user name entry is again started from the device list window WD1 being displayed.

If in step S205 it is judged that the user has confirmed the user name entry, step S206 is reached.

In step S206, the entered user name is written to the user name list file in conjunction with the node unique ID of the target device for storage on the hard disc (in the hard disc drive 207). If an existing user name is to be updated, the content of the user name corresponding to the node unique ID of the target device is updated.

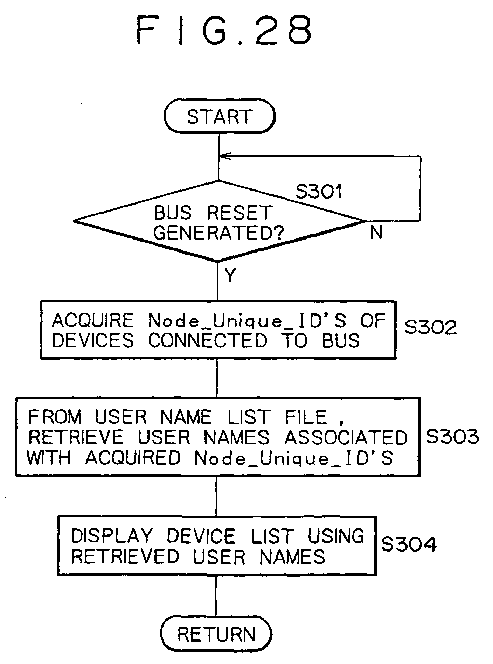

Described below with reference to the flowchart of Fig. 28 are typical processing steps to display the device list window WD1 upon bus reset generation. These steps are also carried out by the CPU 203 of the personal computer 113.

In step S301 of Fig. 28, generation of a bus reset is awaited. If a bus reset is detected, then step S302 is reached.

In step S302, the node unique IDs of the devices connected to the IEEE 1394 bus are acquired. In practice, the CPU 201 first sends illustratively AV/C commands to the devices currently connected to the IEEE 1394 bus, thereby requesting notification of their node unique IDs. In response to the commands, the devices return notices of their node unique IDs that are acquired by the CPU 201.

In step S303, the CPU 201 retrieves from the user name list file the user names corresponding to the node unique IDs acquired in step S302.

In step S304, the CPU 201 executes display control using the retrieved user names to display the device list window WD1 shown illustratively in Figs. 23 through 25. More specifically, the user names of the connected devices are indicated inside their device icons ICN.

If any node unique ID is detected which does not exist in the user name list file at this point, a device icon ICN such as that denoting device #3 in Fig. 23 is displayed, indicating the device having the node unique ID in question.

For the preceding description, it has been assumed that the device list window WD1 is being opened for user name display. However, the assumption is only for illustrative purposes and is not limitative of the invention.

For example, with application programs actually running, there can be many other preferred GUI formats conducive to displaying user names indicative of the configured devices. The forms of user name display discussed above should not be construed as limiting the scope of the invention.

Other steps to enter user names, other procedures for the entry, and other user interfaces may also be adopted alternatively.

Although the personal computer 113 was shown above having functions to permit user name entry and display, such functions are not limited to a personal computer and may be consigned to other apparatuses including an AV amplifier compatible with the IEEE 1394. Furthermore, the devices employed to build a communication system in combination with the inventive information processing apparatus are not limited to AV devices; other devices may be utilized instead.

The invention applies not only to the IEEE 1394 interface but also to other digital data interfaces.

As described and according to the invention, a desired user name (as text information) is entered and set in conjunction with each of the devices (information processing apparatuses) connected to the data bus. Such user names are displayed on the screen in a manner permitting recognition by the user of the corresponding devices. This makes it appreciably easier for the user to recognize the configured devices than if preinstalled ID information is displayed corresponding to each of the devices.

The user names entered according to the invention are not for temporary use but for extended management. That is, each user name is stored in combination with the node unique ID (device ID information) of the device in question into the user name list file (made of correspondence information). Illustratively, in the event of a bus reset, the node unique IDs of the currently configured devices are acquired so as to retrieve the corresponding user names from the user name list file. The retrieved user names are suitably displayed in association with the corresponding devices reflecting the connective relations established following the bus reset.

In the manner described, the present invention is particularly effective in enhancing the usability of a data interface system through visual recognition by the user of the devices connected to the data bus.

As many apparently different embodiments of this invention may be made without departing from the spirit and scope thereof, it is to be understood that the invention is not limited to the specific embodiments thereof except as defined in the appended claims.

## Claims

1. A controlling device for controlling a plurality of controlled devices connected to a data bus for data transmission based on a predetermined communication format, said controlling device comprising:
inputting means for inputting text information corresponding to each of said plurality of controlled devices;
device identification information acquiring means for acquiring device identification information from said plurality of controlled devices, the acquired device identification information being unique to each of said controlled devices;
storage controlling means for storing into storing means said text information input through said inputting means, in combination with said device identification information acquired by said device identification information acquiring means; and
display controlling means which, based on said device identification information acquired by said device identification information acquiring means, retrieves said text information stored in said storing means in combination with said device identification information, said display controlling means further displaying the retrieved text information.

2. A controlling device according to claim 1, wherein said device identification information acquiring means acquires node unique IDs from said plurality of controlled devices.

3. A controlling device according to claim 2, wherein said device identification information acquiring means acquires vender IDs and model names from said plurality of controlled devices.

4. A controlling device according to claim 2 or 3, wherein, if said storing means holds no text information representing device identification information, said display controlling means displays node unique IDs in place of said device identification information.

5. A controlling device according to any one of claims 2 to 4, wherein, if said storing means holds no text information representing device identification information, said display controlling means displays vender IDs and model names in place of said device identification information.

6. A controlling device according to any one of the preceding claims, further comprising bus reset detecting means for detecting a bus reset of said data bus, wherein, upon detection of a bus reset of said data bus by said bus reset detecting means, said device identification information acquiring means again acquires device identification information from said plurality of controlled devices, the acquired device identification information being unique to each of said controlled devices.

7. A controlling device according to any one of the preceding claims, wherein said controlling device is a personal computer.

8. A controlling device according to any one of the preceding claims, wherein said predetermined communication format permits synchronous transmission and reception of data as well as asynchronous transmission and reception of various control commands.

9. A controlling device according to any one of the preceding claims, wherein said predetermined communication format complies with IEEE 1394 criteria.

10. A controlling device according to any one of the preceding claims, wherein at least one of said plurality of controlled devices is audio visual equipment.

11. A communication system comprising a controlling device according to any one of the preceding claims, a data bus for data transmission based on a predetermined communication format, and a plurality of controlled devices connected to said controlling device through said data bus.

12. A method for controlling a plurality of controlled devices connected to a data bus for data transmission based on a predetermined communication format, said method comprising the steps of:
inputting text information corresponding to each of said plurality of controlled devices;
acquiring device identification information from said plurality of controlled devices, the acquired device identification information being unique to each of said controlled devices;
storing into storing means the input text information input in combination with the acquired device identification information; and
retrieving, based on the acquired device identification information, said text information stored in said storing means in combination with said device identification information, while displaying the retrieved text information.

13. A method for controlling a communication system having a controlling device, a data bus for data transmission based on a predetermined communication format, and a plurality of controlled devices connected to said controlling device through said data bus, said method comprising the steps of:
inputting text information corresponding to each of said plurality of controlled devices;
acquiring device identification information from said plurality of controlled devices, the acquired device identification information being unique to each of said controlled devices;
storing into storing means the input text information input in combination with the acquired device identification information; and
retrieving, based on the acquired device identification information, said text information stored in said storing means in combination with said device identification information, while displaying the retrieved text information.
